# EUROPEAN PATENT APPLICATION

(11) **EP 1 376 022 A1**
(43) Date of publication of application: **02.01.2004**
(21) Application number: 01917768.2
(22) Date of filing: 30.03.2001
(51) Int. Cl.: F24F 7/08

(54) **METHOD OF MANUFACTURING VENTILATOR**

(71) Applicant: Daikin Industries, Ltd., Osaka-shi, Osaka 530-8323 (JP)
(72) Inventor: MATSUGI, Yoshitaka, Kanaoka Factory, Sakai Plant, Sakai-shhi, Osaka 591-8511 (JP); IGUCHI, Katsumi, c/o Kanaoka Factory, Sakai Plant, Sakai-shi, Osaka 591-8511 (JP); KAWAGUCHI, Takuya, Kanaoka Factory, Sakai Plant, Sakai-shi, Osaka 591-8511 (JP)
(74) Representative: Laufhütte, Dieter, Dr.-Ing.
(86) International application number: PCT/JP2001/002838
(87) International publication number: WO 2002/081976

(57) **Abstract**

When assembling a ventilating apparatus **(1)**, a casing assembling step is first carried out. In the casing assembling step, a front sideplate **(4)**, a rear sideplate **(5)**, a left sideplate **(6)**, and a right sideplate **(7)** are mounted on a bottom plate **(3)** and as a result a unit casing **(2)** without a top plate **(8)** is obtained. A fan assembling step is carried out after or concurrently with the casing assembling step. In the fan assembling step, a fan assembly **(70)** made up of a plurality of components such as a fan housing, a fan rotor and the like is assembled. Subsequently, a fan mounting step is carried out. In this step, the fan assembly **(70)** assembled in the fan assembling step is mounted on the unit casing **(2)** assembled in the casing assembling step. That is, the preassembled fan assembly **(70)** is mounted on the unit casing **(2)**.

## Description

### Technical Field

The present invention relates to a method of manufacturing a ventilating apparatus.

### Background Art

As disclosed in for example Japanese Patent Application Laid-Open Gazette No. H04-281143, a ventilating apparatus provided with a heat exchanging element has been known in the prior art. Such a type of ventilating apparatus is operable to supply air indoors and exhaust air from the room outdoors, at which time outdoor air which is being delivered indoors and indoor air which is being discharged outdoors will flow into the heat exchanging element. In the heat exchanging element, heat is exchanged between the outdoor air and the indoor air both sent to the heat exchanging element. Further, in the heat exchanging element of the aforesaid ventilating apparatus, moisture is also transferred between the outdoor air and the indoor air.

For example in the situation that the room is heated in the winter, the outdoor air is cold and dry, whereas the indoor air is warm and holds therein a lot of moisture. And, in the heat exchanging element of the ventilating apparatus, sensible heat and moisture in the indoor air that is discharged outdoors are taken into the outdoor air that is supplied indoors. That is, the use of the ventilating apparatus of the type described above makes it possible to reduce the increase in air-conditioning load due to ventilation.

### - Problems that The Invention Intends to Solve -

For the case of the above-described ventilating apparatus, a plurality of functional units, such as a heat exchanging element, a fan and the like, are all accommodated in a single casing. Further, these functional units, e.g., a heat exchanging element, a fan and the like, are each made up of a plurality of components. Therefore, the assembling of a ventilating apparatus may be carried out by employing such a procedure that a plurality of components, which together form for example a fan as a functional unit, are first housed in the casing one at a time and then the fan is assembled within the casing.

However, if such a procedure is employed, assembling operations must be done in a confined space, i.e., within the casing. This therefore prolongs the time required for the assembly work, therefore resulting in the drop in production efficiency of the ventilating apparatus. Such also gives rise to the occurrence of misassembly, and the rate of occurrence of defective products increases, therefore increasing the costs of production.

Bearing in mind the above-described problems, the present invention was made. Accordingly, an object of the present invention is to provide facility for assembling a ventilating apparatus with a view to shortening the time required for the assembly work of the ventilating apparatus and enhancing the accuracy of the assembly work.

### Disclosure of Invention

A first solving means taken by the present invention is directed to a method of manufacturing a ventilating apparatus wherein an air-supply fan **(17)** for supplying outdoor air indoors, an air-exhaust fan **(18)** for discharging indoor air outdoors, and a heat exchanging element **(15)** for effecting heat exchange between outdoor air which is supplied indoors and indoor air which is discharged outdoors are housed in a single casing **(2)**. And, in the ventilating apparatus manufacture method, a casing assembling step of assembling part of the casing **(2)** by mounting sideplates **(4, 5, 6, 7)** on a bottom plate **(3)**, a fan assembling step of assembling a fan assembly **(70)** made up of a plurality of components, and a fan mounting step of mounting the fan assembly **(70)** assembled in the fan assembling step on the casing **(2)** assembled in the casing assembling step as the air-supply fan **(17)** or as the air-exhaust fan **(18)** are carried out.

A second solving means taken by the present invention is a ventilating apparatus manufacture method according to the first solving means. In the second solving means, a first step of mounting a fan motor **(21)** on a mounting base **(25)**, a second step of mounting a cylindrical fan rotor **(20)** on a drive shaft **(71)** of the fan motor **(21)**, and a third step of fixing the mounting base **(25)** to a fan housing **(19)** by inserting the fan rotor **(20)** in the fan housing **(19)** are carried out in order in the fan assembling step.

A third solving means taken by the present invention is a ventilating apparatus manufacture method according to the first solving means. In the third solving means, the step of mounting on the casing **(2)** the heat exchanging element **(15)**, preassembled so as to provide alternate formation of passages for indoor air and passages for outdoor air in the direction in which many plate-like members **(44, 44, ...)** are stacked together, is carried out posterior to the fan mounting step.

A fourth solving means taken by the present invention is a ventilating apparatus manufacture method according to the first solving means. In the fourth solving means, the step of mounting on the casing **(2)** a damper assembly **(36)**, preassembled so as to make a passage formed therein for allowing air to bypass the heat exchanging element **(15)** switchable between a communication state and a cutoff state, is carried out between the casing assembling step and the fan mounting step.

### - Operation -

In the manufacture method of the ventilating apparatus (1) of the first solving means, a casing assembling step, a fan assembling step, and a fan mounting step are carried out. In the casing assembling step, the bottom plate **(3)** and the sideplates **(4, 5, 6, 7)** of the casing **(2)** are assembled together. That is, of the components of the casing **(2)**, those other than the top plate **(8)** are assembled together in this step. In the fan assembling step, the fan assembly **(70)** is fabricated by assembling a plurality of components. And, in the fan mounting step, the fan assembly **(70)** assembled in the fan assembling step is mounted on the casing **(2)** assembled in the casing assembling step, i.e., the partially-completed casing **(2)** with the sideplates **(4, 5, 6, 7)** mounted on the bottom plate **(3)**. Any one of the casing assembling step and the fan assembling step may be carried out prior to the other. Alternatively, both of these two steps may be carried out concurrently at the same time.

In the second solving means, three steps are carried out in the fan assembling step. In the first place, a first step is carried out. In the first step, the fan motor **(21)** for driving the fan rotor **(20)** is mounted on the mounting base **(25)** so that the fan motor **(21)** is supported on the mounting base **(25)**. Subsequently, a second step is carried out. In the second step, the fan rotor **(20)** is mounted on the drive shaft **(71)** of the fan motor **(21)**. Thereafter, a third step is carried out. In the third step, the fan rotor **(20)** mounted on the fan motor **(21)** is inserted in the fan housing **(19)**, for fixing the mounting base **(25)** mounted on the fan motor **(21)** to the fan housing **(19)**.

In the third solving means, the heat exchanging element **(15)** in a preassembled state is mounted on the casing **(2)**. The step of mounting the heat exchanging element **(15)** is carried out posterior to the fan mounting step. That is, the heat exchanging element **(15)** is mounted on the bottom plate **(3)** and the sideplates **(4, 5, 6, 7)** of the casing **(2)** assembled in the casing assembling step after the fan assembly **(70)** is mounted.

In the fourth solving means, the damper assembly **(36)** in a preassembled state is mounted on the casing **(2)**. The step of mounting the damper assembly **(36)** is carried out posterior to the casing assembling step but prior to the fan mounting step. That is, the fan assembly **(70)** is mounted on the bottom plate **(3)** and the sideplates **(4, 5, 6,** **7)** of the casing **(2)** assembled in the casing assembling step after the damper assembly **(36)** is mounted.

### - Effects -

In the present invention, the fan assembly **(70)** is previously completed in the fan assembling step and the completed fan assembly **(70)** is then mounted on the casing **(2)** in the fan mounting step. This makes it possible to carry out the assembly operation of the fan assembly **(70)** in the fan assembling step, not in a confined space in the casing **(2)** but on for example a work bench for ease of operation. Accordingly, in accordance with the present invention, it is possible to facilitate the assembly operation of the fan assembly **(70)** and shorten the time required for the assembly operation of the fan assembly **(70)**. Further, in accordance with the present invention, it is possible to enhance production efficiency by shortening the time required for the assembling of the ventilating apparatus **(1)** and it is further possible to hold the rate of occurrence of defective products low by providing facility for assembling the ventilating apparatus **(1)**.

Especially, the heat exchanging element **(15)** is first preassembled and then mounted on the casing **(2)** in the third solving means. On the other hand, in the fourth solving means the damper assembly **(36)** is first preassembled and then mounted on the casing **(2)**. Therefore, by virtue of these solving means, much more components can be assembled before they are mounted on the casing **(2)**, thereby making it possible to improve the production efficiency of the ventilating apparatus **(1)** to a further extent.

### Brief Description of Drawings

Figure **1** is a perspective view showing an internal arrangement of the ventilating apparatus.
Figure **2** is a front view of the fan assembly.
Figure **3** is a side view of the fan assembly.
Figure **4** is a perspective view of the zoning member.
Figure **5** is an exploded perspective view of the damper assembly.
Figure **6** is a side view of the heat exchanging element.
Figure **7** is a perspective view illustrating liners of the heat exchanging element.
Figure **8** is a top view of the guide rail.
Figure **9** is a cross-sectional view of the guide rail.
Figure **10** is a view showing some manufacture steps of the ventilating apparatus.
Figure **11** is a view showing some manufacture steps of the ventilating apparatus.

### Best Mode for Carrying Out the Invention

Hereinafter, an embodiment of the present invention will be described in detail with reference to the accompanying drawings.

### - Constitution of the Ventilating Apparatus -

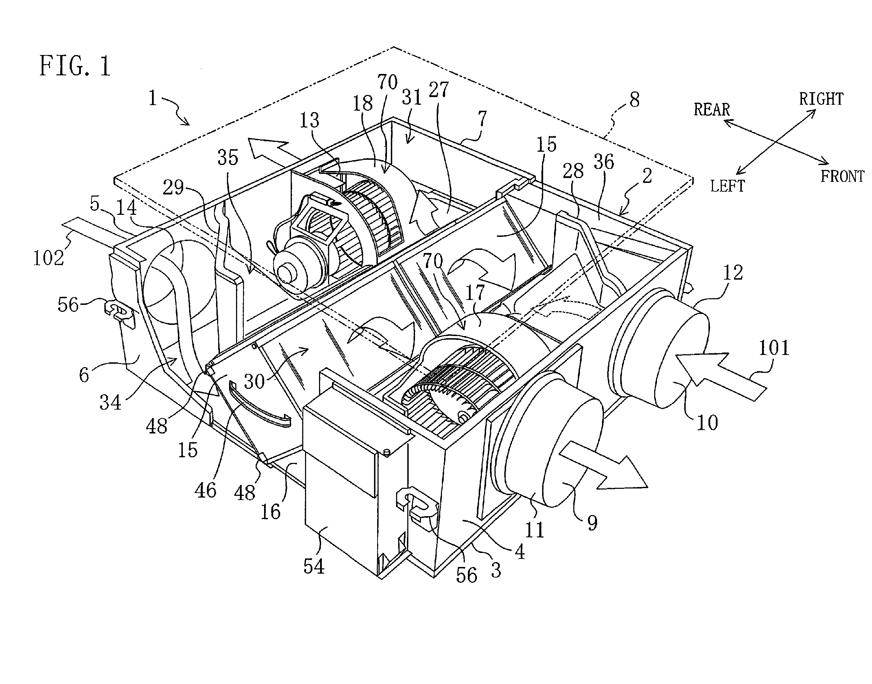

As shown in Figure **1**, the ventilating apparatus **(1)** is a heat taking-in type ventilating apparatus operable to effect heat exchange between air **(101)** taken in from within the room and fresh air **(102)** taken in from the outdoors through a heat exchanging element **(15)** so that it provides ventilation while taking in heat held in the indoor air **(101)**.

### < Unit Casing >

A unit casing **(2)** of the ventilating apparatus **(1)** is formed into a rectangular parallelepipedic shape. The unit casing **(2)** is made up of a bottom plate **(3)**, a front sideplate **(4)**, a rear sideplate **(5)**, a left sideplate **(6)**, a right sideplate **(7)**, and a top plate **(8)**. Formed in a left-hand portion of the front sideplate **(4)** is a first outlet port **(9)** for the discharge of the outside air **(102)** to the inside of the room. On the other hand, formed in a right-hand portion of the front sideplate **(4)** is a first inlet port **(10)** for the taking in of air from the room inside. The first outlet port **(9)** and the first inlet port **(10)** are provided with duct adapters **(11, 12)**, respectively, for attachment to ducts (not shown) extending indoors. A second outlet port **(13)** for the discharge of air taken in from the room inside to the outdoors is formed in a right-hand portion of the rear sideplate **(5)**. On the other hand, formed in a left-hand portion of the rear sideplate **(5)** is a second inlet port **(14)** for the introduction of outside air from the outdoors. The second outlet port **(13)** and the second inlet port **(14)** are also provided with duct adapters (not shown), respectively, of the same type as the duct adapters **(11, 12)**. Formed at the center of the left sideplate **(6)** is an opening **(16)** through which heat exchanging elements **(15, 15)** (which will be described later) are inserted.

### < Fan units >

A fan unit **(17)** for air-supply is positioned in the vicinity of the first outlet port **(9),** serving as an air-supply fan. A fan unit **(18)** for air-exhaust is positioned in the vicinity of the second outlet port **(13)**, serving as an air-exhaust fan. Both the air-supply fan unit **(17)** and the air-exhaust fan unit **(18)** are fan assemblies **(70)** having the same structure. Here, description will be made on the fan assembly **(70)** acting as the air-supply fan unit **(17)**.

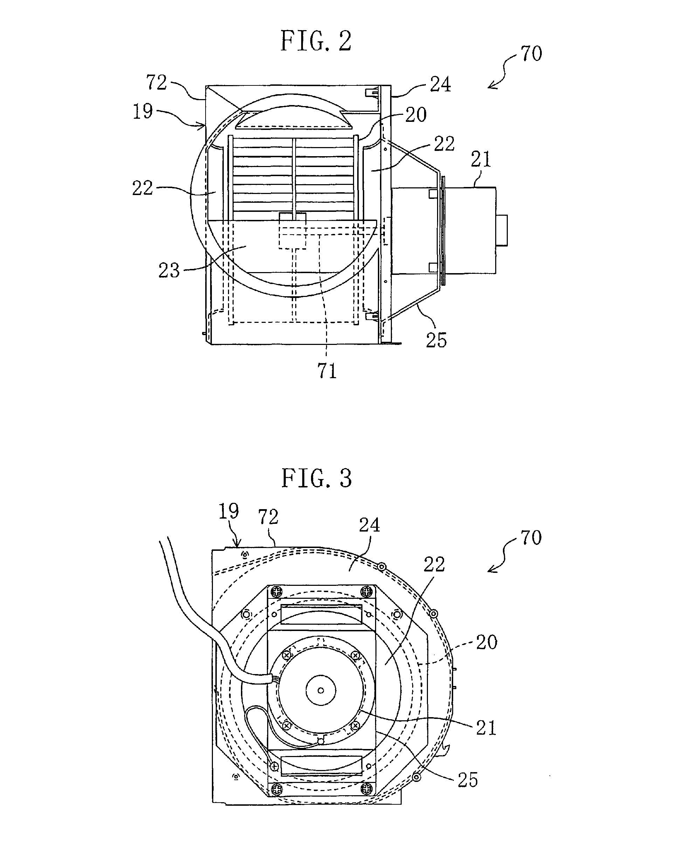

As shown in Figures **2** and **3**, the fan assembly **(70)** is implemented by a so-called double suction type sirocco fan. The fan assembly **(70)** includes a fan housing **(19)**, a fan rotor **(20)** accommodated within the fan housing **(19)**, and a fan motor **(21)** for driving the fan rotor **(20)**.

The fan housing **(19)** is made up of a fan housing main body **(72)** and a partition plate **(24)**. An air outlet port **(23)** is formed in the front side of the fan housing main body **(72)**. The left side of the fan housing main body **(72)** is partially opened and such an opening serves as a bellmouth-like suction port **(22)** for the suction of air. On the other hand, the entire right side of the fan housing main body **(72)** is opened and the partition plate **(24)** is so attached as to cover the right side of the fan housing main body **(72)**. An opening is formed in the partition plate **(24)** so that the fan rotor **(20)** can be inserted therethrough.

A mounting base **(25)** is attached to the partition plate **(24)** of the fan housing **(19)**. The air suction port **(22)**, formed into a bellmouth shape, is formed integrally in the mounting base **(25)**. Further, the fan motor **(21)** is fixed to the mounting base **(25).** The fan rotor **(20)** is fixed to a drive shaft **(71)** of the fan motor **(21).** Such arrangement allows the fan motor **(21),** the mounting base **(25)**, and the fan rotor **(20)** to be mounted detachably to the fan housing **(19)** in the form of one piece.

As shown in Figure **1**, the fan assembly **(70)** as the air-supply fan unit **(17)** is disposed at a left front portion in the unit casing **(2)** so that the outlet port **(23)** of the fan housing **(19)** and the first outlet port **(9)** of the unit casing **(2)** are in continuous connection. The other fan assembly **(70)** as the air-exhaust fan unit **(18)** is disposed at a right rear portion in the unit casing **(2)** so that the outlet port **(23)** of the fan housing **(19)** and the second outlet port **(13)** of the unit casing **(2)** are in continuous connection.

### < Spacers >

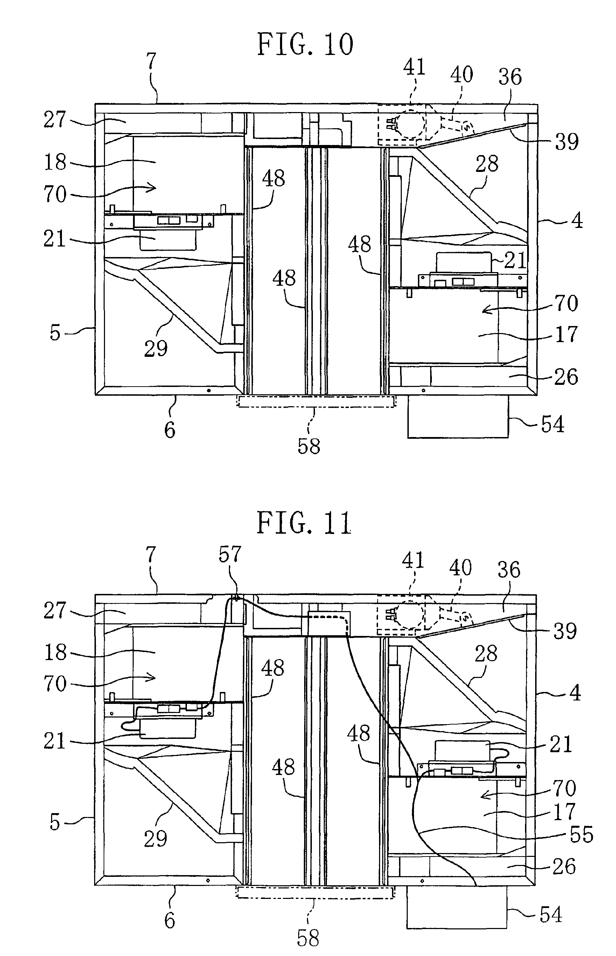

Positioned at a left front corner in the unit casing **(2)** is a first spacer **(26)** (see Figure **10** or Figure **11**) by which a clearance is defined between the air-supply fan unit **(17)** and the left sideplate **(6)**. The first spacer **(26)** serves to secure an air passage for the suction of air from the suction port **(22)** on the left of the air-supply fan unit **(17)**. Likewise, positioned at a right rear corner of the unit casing **(2)** is a second spacer **(27)** by which a clearance is defined between the air-exhaust fan unit **(18)** and the right sideplate **(7)**. The second spacer **(27)** servers to secure an air passage for the suction of air from the suction port **(22)** on the right of the air-exhaust fan unit **(18)**.

### < Zoning Members >

As shown in Figure **1**, a first zoning member **(28)** is positioned at a right front portion in the unit casing **(2)**. A second zoning member **(29)** is positioned at a left rear portion of the unit casing **(2)**. The first zoning member **(28)** and the second zoning member **(29)** are members for dividing the inside of the unit casing **(2)** into an air-supply passage **(30)** and an air-exhaust passage **(31)**.

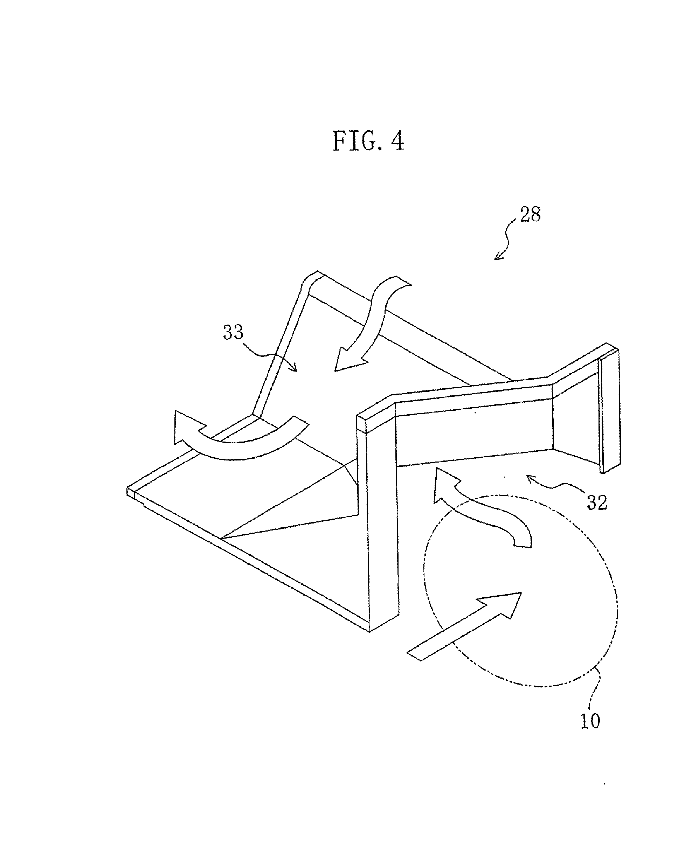

As shown also in Figure **4**, the first zoning member **(28)** provides a division into an air passage **(32)** through which indoor air drawn in from the first suction port **(10)** is led to the lower left and an air passage **(33)** through which outside air, after passing through the heat exchanging element **(15)**, is led to the left. The air passage **(32)** is a passage for introducing indoor air into a passage on the air-exhaust side of the heat exchanging element **(15)** (which will be described later), whereas the air passage **(33)** is a passage for leading outside air withdrawn from a passage on the air-supply side of the heat exchanging element **(15)** to the air-supply fan unit **(17)**.

The second zoning member **(29)** has the same constitution as the first zoning member **(28)**. The second zoning member **(29)** provides a division into an air passage **(34)** through which outdoor air drawn in from the second suction port **(14)** is led to the air-supply side passage of the heat exchanging element **(15)** and an air passage **(35)** through which indoor air withdrawn from the air-exhaust side passage of the heat exchanging element **(15)** is led to the air-exhaust fan unit **(18)**.

The first zoning member **(28)** and the second zoning member **(29)** are simply fitted in specified positions in the unit casing **(2)**, in other words they are not fixed to the unit casing **(2)** by using special fixing means such as a screw.

### < Damper Assembly >

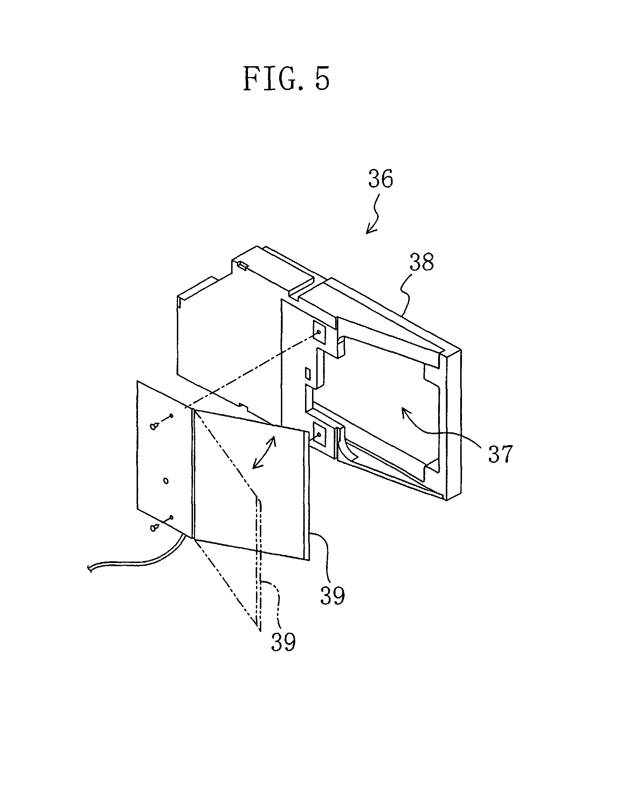

As shown in Figure **1**, disposed at a right front corner in the unit casing **(2)** is a damper assembly **(36)** for switching passages for air drawn in from the first inlet port **(10)**. As shown in Figure **5**, the damper assembly **(36)** has a main body portion **(38)** in which a bypass passage **(37)** is formed and a damper plate **(39)** for covering the bypass passage **(37)** in an openable and closable manner. The main body portion **(38)** is made of styrene foam. A flow-out port (not shown) of the bypass passage **(37)** is formed in the rear side of the main body portion **(38)**.

A damper arm **(40)** pin-connected to the damper plate **(39)** and a damper motor **(41)** for expanding and contracting the damper arm **(40)** are formed at the back of the damper plate **(39)** (not shown in Figure 5, but see Figure **10** or Figure **11**). The damper plate **(39)** is opened when the damper arm **(40)** is extended by the damper motor **(41)**, whereas the damper plate **(39)** is closed when the damper arm **(40)** is contracted by the damper motor **(41)**.

As shown in Figure **1**, when the damper plate **(39)** is placed in the closed state, indoor air sucked in from the first suction port **(10)** flows through the air passage **(32)**, passes through the heat exchanging element **(15),** and is discharged outdoors. On the other hand, when the damper plate **(39)** is placed in the opened state, the bypass passage **(37)** in the main body portion **(38)** is opened and the air passage **(32)** is closed by the damper plate **(39)**. And, the indoor air sucked in from the first suction port **(10)** flows through the bypass passage **(37)** and is discharged outdoors, bypassing the heat exchanging element **(15)**.

### < Heat Exchanging Elements >

As shown in Figure **1**, positioned at longitudinal central portions in the unit casing **(2)** are the heat exchanging elements **(15, 15)** extending in a right-left direction. Stated another way, the heat exchanging elements **(15, 15)** are disposed between the air-supply fan unit **(17)** and the first zoning member **(28)**, and the air-exhaust fan unit **(18)** and the second zoning member **(29).**

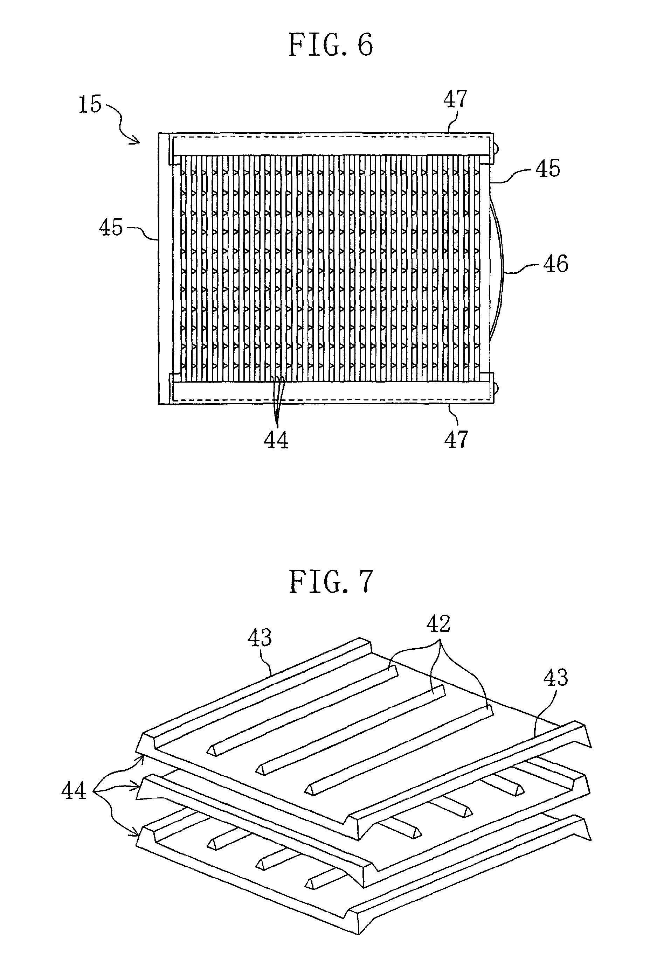

As shown in Figure **6,** the heat exchanging element **(15)** is constituted by a total enthalpy heat exchanger. As shown in Figure **7**, the heat exchanging element **(15)** is formed by the stacking together of a plurality of liners **(44, 44, ...)** having ribs **(43)** and spacers **(42)** extending in one direction. These liners **(44, 44, ...)** each constitute a plate member. And, the liners **(44, 44, ...)** are each formed by a plate material of paper of approximately square shape and are stacked together such that the direction in which the ribs **(43)** and the spacers **(42)** of each liner **(44)** extends is different from the direction in which the ribs **(43)** and the spacers **(42)** of the other liner **(44)** extends. This results in alternate formation of air-supply passages and air-exhaust passages between the liners **(44, 44, ...)**.

In the heat exchanging element **(15)**, there occurs heat exchange between outdoor air circulating in the air-supply passage and indoor air circulating in the air-exhaust passage, through the liner **(44)**. In addition, there occurs moisture transfer between the outdoor air in the air-supply passage and the indoor air in the air-exhaust passage, through the liner **(44)**. That is, in addition to the transfer of sensible heat between the outdoor air in the air-supply passage and the indoor air in the air-exhaust passage, there is the transfer of latent heat, held in water vapors present in the outdoor air and the indoor air, in the heat exchanging element **(15).**

End plates **(45, 45)** are positioned at both ends with respect to the longitudinal direction (the same direction in which the liners **(44, 44, ...)** are stacked together) of the heat exchanging element **(15).** One of the end plates **(45, 45)** is provided with a handle **(46).** Attached to the four corners of the liners **(44, 44, ...)** stacked together are frame columns **(47)** extending in the longitudinal direction of the heat exchanging element **(15).** The liners **(44, 44, ...)** are fixed by the end plates **(45, 45)** and the four frame columns **(47).**

In the present embodiment, the heat exchanging element **(15)** is implemented by a total enthalpy heat exchanger. However, the heat exchanging element **(15)** may be implemented by a sensible heat exchanger if there is no need for the transfer of moisture between the indoor air and the outdoor air. In this case, the material, of which the liner **(44)** of the heat exchanging element **(15)** is made, is not moisture-permeable paper but resin or metal exhibiting no moisture-permeability.

### < Guide Rails >

A guide rail **(48)** extending in a right-left direction is attached to a longitudinal central portion of the bottom plate **(3)** of the unit casing **(2)**. Further, another guide rail **(48)** extending in a right-left direction is also attached to a longitudinal central portion of the top plate **(8)** (not shown). Besides, guide rails **(48, 48)** are mounted on the rear of the air-supply fan unit **(17)** and the first' zoning member **(28)** and on the front of the air-exhaust fan unit **(18)** and the second zoning member **(29)**, respectively. These guide rails **(48)** serve to guide insertion and removal of the heat exchanging element **(15)** with respect to the unit casing **(2)**. Further, as will be described later, these guide rails **(48)** play also a role of securing an air passage between themselves and the heat exchanging elements **(15)** by pressing the fan units **(17, 18)** and the zoning members **(28, 29)** toward the front or rear.

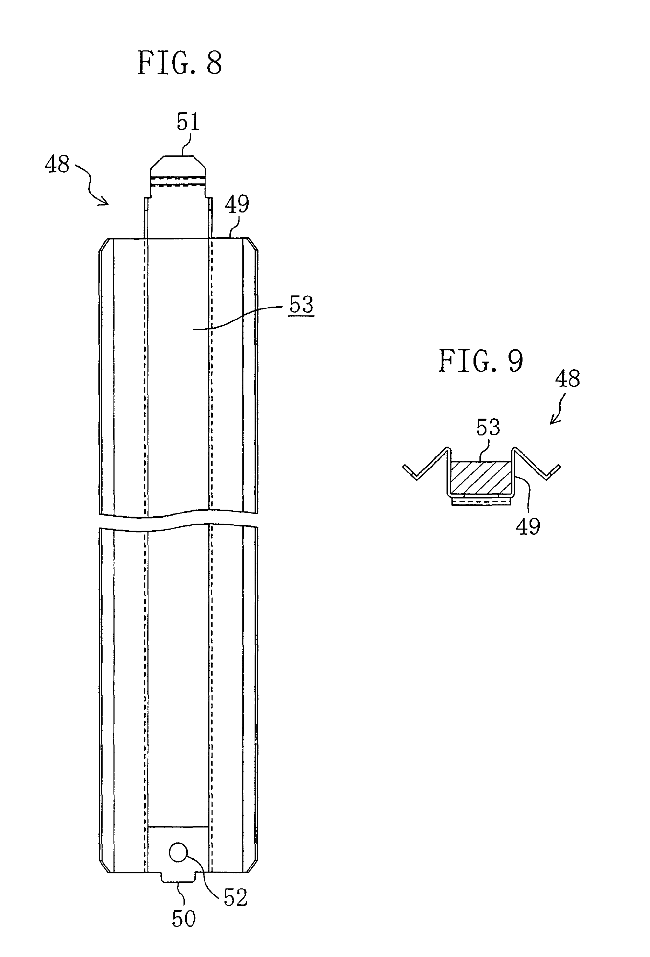

As shown in Figures **8** and **9**, the guide rail **(48)** includes a rail main body portion **(49)** in which a recessed portion for supporting therein the frame column **(47)** of the heat exchanging element **(15)** is formed, a fixation portion **(50)** provided at one longitudinal end of the rail main body portion **(49),** and a claw portion **(51)** provided at the other longitudinal end. A hole **(52)**, through which fixing means such as a screw is passed, is formed in the fixation portion **(50)**. The claw portion **(51)** is formed in the form of a thin plate projecting in the longitudinal direction of the rail main body portion **(49)**. A seal material **(53)** is embedded in the recessed portion of the rail main body portion **(49)**. The seal material **(53)** is made of a material which is readily deformable upon receiving pressing force by the frame column **(47)** of the heat exchanging element **(15)**, so that the seal material **(53)** becomes adhered to the frame column **(47)** thereby preventing leakage of air.

### < Other Members >

As shown in Figure 1, an electric appliance box **(54)**, in which electric appliances are housed, is mounted on the front of the left sideplate **(6)** of the unit casing **(2)**. An introduction port (not shown), through which a cable **(55)** (not shown in Figure **1**, but see Figure 11 in which although the cable **(55)** is represented by a single line it is actually made up of a plurality of cables) for the air-supply fan unit **(17)**, the air-exhaust fan unit **(18)**, and the damper motor **(41)** is inserted, is formed through the front of the left sideplate **(6)**.

The air-supply passage and the air-exhaust passage of the heat exchanging element **(15)** are provided, in their fronts thereof, with filters, respectively (not shown). Insulating material (not shown) is affixed to part of the interior wall of the unit casing **(2)**. Attached to the left sideplate **(6)** and to the right sideplate **(7)** are hanging metals **(56).**

### - Running operation of the Ventilating Apparatus -

During ventilation, both the fan units **(17, 18)** are activated and indoor air is introduced into the unit casing **(2)** from the first inlet port **(10)**. The indoor air, after passing through the air-exhaust passage of the heat exchanging element **(15)**, is discharged outdoors from the second outlet port **(13)**. Meanwhile, fresh outside air is introduced from the second inlet port **(14)**. This outside air, after passing through the air-supply passage of the heat exchanging element **(15)**, is supplied indoors through the first outlet port **(9)**.

At that time, the transfer of sensible heat and the transfer of moisture take place in the heat exchanging element **(15)**. More specifically, in the state where the room is cooled in the summer, the outside air is higher in temperature and holds more moisture than the indoor air. Because of this, sensible heat and moisture transfer from the outside air to the indoor air in the heat exchanging element **(15)**. And, the outside air cooled and dehumidified in the heat exchanging element **(15)** is delivered indoors. On the other hand, in the state where the room is heated in the winter, the indoor air is higher in temperature and holds more moisture than the outside air. Because of this, sensible heat and moisture transfer from the indoor air to the outside air in the heat exchanging element **(15)**. And, the outside air heated and moistened in the heat exchanging element **(15)** is delivered indoors.

In the case energy saving can be achieved by introducing outdoor air without having to subject it to a heat exchange process (for example when the outdoor temperature is lower than the indoor set temperature during the cooling), the damper plate **(39)** of the damper assembly **(36)** is placed in the opened state. And, indoor air sucked in from the first inlet port **(10)** flows through the bypass passage **(37)** and is discharged outdoors from the second outlet port **(13)**. In such a case, no heat exchange takes place between the outside air and the indoor air.

### - Method of Manufacturing the Ventilating Apparatus -

A process of manufacturing the ventilating apparatus **(1)** will be described below.

In the first place, a casing assembling step is carried out. More specifically, the bottom plate **(3)** is prepared and thermal insulation is affixed to a specified portion of the bottom plate **(3)**. Thereafter, the front sideplate **(4)**, the rear sideplate **(5)**, the left sideplate **(6)**, and the right sideplate **(7)** are attached to the bottom plate **(3)**. As a result, the unit casing **(2)** without the top plate **(8)** is obtained.

Next, the damper assembly **(36)**, which has been preassembled, is attached to a right front portion in the unit casing **(2)**. The damper assembly **(36)** is assembled by mounting on the main body portion **(38)** the damper motor **(41)**, the damper arm **(40)**, and the damper plate **(39)**, and then by pin-connecting together the damper plate **(39)** and the damper arm **(40)**. The assembly operation of the damper assembly **(36)** may be carried out concurrently with the aforesaid casing assembling step. Alternatively, it may be carried out in advance at for example another factory.

Subsequently, the first spacer **(26)** and the second spacer **(27)** are disposed at a left front portion and at a right rear portion respectively in the unit casing **(2)**.

A fan assembling step is carried out concurrently with or after the operations so far. In the fan assembling step, the following steps are carried out in order. In a first step, the partition plate **(24)** is attached to the fan housing main body **(72)** for the assembling of the fan housing **(19)**. In the next step, the fan motor **(21)** is mounted on the mounting base **(25)**. In the next step, the fan rotor **(20)** is mounted on the drive shaft **(71)** of the fan motor **(21)**. The mounting base **(25)**, the fan motor **(21)**, and the fan rotor **(20)** now become integrated. In the next step, the fan rotor **(20)** is inserted in the fan housing **(19)** from the side of the partition plate **(24)** and the mounting base **(25)** is fixed to the partition plate **(24)**. In the fan assembling step, the fan assembly **(70)** is assembled through the foregoing steps. In the fan assembling step, two fan assemblies **(70)** are assembled.

A fan mounting step is carried out after the casing assembling step and the fan assembling step have been completed. This fan mounting step is carried out by the same assembler as the fan assembling step is carried out. More specifically, in the fan mounting step, one of the fan assemblies **(70)** assembled in the fan assembling step is mounted, as the air-supply fan unit **(17)**, at a left front portion in the unit casing **(2)** (see Figure **1**). The remaining other fan assembly **(70)** assembled in the fan assembling step is mounted, as the air-exhaust fan unit **(18)**, at a right rear portion in the unit casing **(2)** (see Figure **1**).

Next, the first zoning member **(28)** is placed into between the air-supply fan unit **(17)** and the damper assembly **(36)**, whereas the second zoning member **(29)** is placed into between the air-exhaust fan unit **(18)** and the left sideplate **(6)**.

Subsequently, attachment of each guide rail **(48)** is carried out in the following way (see Figure **10**). With the bottom plate **(3)**, the claw portion **(51)** of a guide rail **(48)** is first either inserted in a clearance defined between the damper assembly **(36)** and the bottom plate **(3)** or pierced into the bottom of the damper assembly **(36)**, for fixing one end of the guide rail **(48)**. And, with such a state remained intact, the guide rail **(48)** is positioned on the bottom plate **(3)** so that the fixation hole **(52)** of the fixation portion **(50)** of the guide rail **(48)** and for example a screw hole formed in the bottom plate **(3)** (not shown) are positioned one over the other. Then, fixing means such as a screw is inserted through the hole **(52)** of the guide rail **(48)**, and the other end of the guide rail **(48)** is fixed to the bottom plate **(3)** by the fixing means.

Subsequently, another guide rail **(48)** is prepared and its claw portion **(51)** is pierced into a longitudinal central portion of the main body portion **(38)** and fixed there. And, while bringing the guide rail **(48)** into contact with the first zoning member **(28)** and with the air-supply fan unit **(17)** so that the first zoning member **(28)** and the air-supply fan unit **(17)** are pressed forward by the guide rail **(48)**, the fixation portion **(50)** of the guide rail **(48)** is fixed to a front edge portion of the opening **(16)** in the left sideplate **(6)**. Further, still another guide rail **(48)** is prepared and its claw portion **(51)** is pierced into a rear portion of the main body portion **(38)** and fixed there. And, with the air-exhaust fan unit **(18)** and the second zoning member **(29)** pressed backward by the guide rail **(48)**, the fixation portion **(50)** of the guide rail **(48)** is fixed to a rear edge portion of the opening **(16)** in the left sideplate **(6).** when fixing the fixation portions **(50)** of the guide rails **(48, 48),** fixing means such as a screw is used, like the guide rail **(48)** for the bottom plate **(3)**.

Next, as shown in Figure **11**, electric wiring of the fan motors **(21)** of the air-supply fan unit **(17)** and the air-exhaust fan unit **(18)** and electric wiring of the damper motor **(41)** are carried out. More specifically, the cable **(55)** formed by bundling an adequate number of cables (note that a cable for the damper motor **(41)** is not diagrammed) is fixed at several points with for example clamp members **(57)** and disposed so that when the heat exchanging element **(15)** is later inserted the cable **(55)** and the heat exchanging element **(15)** will not interfere with each other. And, the cable **(55)** is introduced into the electric appliance box **(54)** and each cable is electrically connected.

Next, the heat exchanging element **(15)** previously assembled is disposed in the unit casing **(2)**. More specifically, positioning is carried out so that the frame columns **(47)** of the heat exchanging element **(15)** are placed into the recessed portions of each guide rail **(48)** and thereafter the heat exchanging element **(15)** is inserted from the opening **(16)** of the left sideplate **(6)** along the guide rail **(48)**. In this way, the two heat exchanging elements **(15, 15)** are disposed one after the other.

Here, the heat exchanging element **(15)** is assembled by: stacking together the liners **(44, 44, ...)** and bonding them together; sandwiching the stacked liners **(44, 44, ...)** between the end plates **(45, 45)** and mounting the frame columns **(47)** at the four corners thereof, respectively; and lastly fastening together the end plates **(45, 45)** and the frame columns **(47)** with screws. The assembly operation of the heat exchanging element **(15)** may be carried out concurrently with the steps up to attaching the heat exchanging element **(15)** to the unit casing **(2)**. Alternatively, the assembly operation may be carried out in advance at for example another factory.

Subsequently, the top plate **(8)**, to which the guide rail **(48)** has been pre-attached or attached concurrently with the aforesaid operations, is mounted on the front sideplate **(4)**, the rear sideplate **(5)**, the left sideplate **(6)**, and the right sideplate **(7)**.

Thereafter, after thermal insulation (not shown) is affixed, filters are inserted on the front sides of the air-supply passage and the air-exhaust passage of the heat exchanging element **(15)** from the opening **(16)** of the left sideplate **(6)**.

Next, the first outlet port **(9)**, the first inlet port **(10)**, the second outlet port **(13)**, and the second inlet port **(14)** are provided with the duct adapters **(11, 12)**. The hanging metals **(56)** are attached to the left sideplate **(6)** and to the right sideplate **(7)**, respectively.

Thereafter, the air-supply fan unit **(17)** and the others are subjected to insulation test and withstand voltage test, and to running test. Next, after a nameplate is affixed, the inside of the unit casing **(2)** is cleaned. And, the opening **(16)** of the left sideplate **(6)** is closed with the openable/closable cover **(58)**. Thereafter, final examinations such as visual inspection are carried out and then packaging is performed after inspection acceptance.

### - Effects of the Embodiment -

In the present embodiment, the fan assembly **(70)** is previously completed in the fan assembling step and the completed fan assembly **(70)** is then mounted on the unit casing **(2)** in the fan mounting step. This makes it possible to carry out the assembly operation of the fan assembly **(70)** in the fan assembling step, not in a confined space in the unit casing **(2)** but on for example a work bench for ease of operation. Accordingly, it is possible to facilitate the assembly work of the fan assembly **(70)** and shorten the time required for the assembly work of the fan assembly **(70)**. Further, in accordance with the present embodiment, it is possible to enhance production efficiency because the time required for the assembling of the ventilating apparatus **(1)** is shortened and it is further possible to hold the rate of occurrence of defective products low by providing facility for assembling the ventilating apparatus **(1)**.

Especially, in the present embodiment, not only the fan assembly **(70)** but also the heat exchanging element **(15)** and the damper assembly **(36)** are first preassembled and then mounted on the unit casing **(2)**. Therefore, in accordance with the present embodiment, much more components can be assembled before they are mounted on the unit casing **(2)**, thereby making it possible to improve the production efficiency of the ventilating apparatus **(1)** to a further extent.

The assembling of the ventilating apparatus **(1)** is usually carried out along an assembly line. Further, in such an assembly line production, there are cases in which the same type of the ventilating apparatus **(1)** is not assembled in succession, but different types of the ventilating apparatus **(1)** are assembled by turn. In such a case, it is required that the specification of the fan assembly **(70)** that is mounted on the unit casing **(2)** be in conformance with the model of the ventilating apparatus **(1)** being assembled. Because of this, if the fan assembling step and the fan mounting step are carried out by different assemblers, this may result in making an error about the specification of the fan assembly **(70)** to be assembled in the fan assembling step. Besides, it is likely that the fan assembly **(70)** of the wrong specification will be mounted on the unit casing **(2)** in the fan mounting step.

On the contrary, in the present embodiment it is arranged such that the fan assembling step and the fan mounting step are carried out by the same assembler. As a result of such arrangement, as long as the assembler does not make an error about the specification of the fan assembly **(70)** to be assembled in the fan assembling step, the assembler will make no error at all about the specification of the fan assembly **(70)** to be mounted on the unit casing **(2)** in the fan mounting step. Therefore, in accordance with the present embodiment, it is possible to reduce the chance of mounting the fan assembly **(70)** of the wrong specification on the ventilating apparatus **(1)**, thereby making it possible to lower the rate of occurrence of defective products.

Besides, in accordance with the present embodiment, even after the installation of the ventilating apparatus **(1)**, the maintenance of the air-supply fan unit **(17)** and the others can be done easily by uncovering the cover **(58)** of the opening **(16)** of the left sideplate **(6)** and then by removing the heat exchanging element **(15)** through the opening **(16)** along the guide rail **(48)**. That is, in accordance with the present embodiment, the maintenance of the ventilating apparatus **(1)** is also easy to carry out.

### Industrial Applicability

As described above, the present invention is useful for ventilating apparatus.

## Claims

1. A method of manufacturing a ventilating apparatus wherein an air-supply fan **(17)** for supplying outdoor air indoors, an air-exhaust fan **(18)** for discharging indoor air outdoors, and a heat exchanging element **(15)** for effecting heat exchange between outdoor air which is supplied indoors and indoor air which is discharged outdoors are housed in a single casing **(2)**, said ventilating apparatus manufacture method comprising:
a casing assembling step of assembling part of said casing **(2)** by mounting sideplates **(4, 5, 6, 7)** on a bottom plate **(3)**;
a fan assembling step of assembling a fan assembly **(70)** made up of a plurality of components; and
a fan mounting step of mounting said fan assembly **(70)** assembled in said fan assembling step on said casing **(2)** assembled in said casing assembling step as said air-supply fan **(17)** or as said air-exhaust fan **(18)**.

2. The ventilating apparatus manufacture method of claim 1, wherein in said fan assembling step a first step of mounting a fan motor **(21)** on a mounting base **(25)**, a second step of mounting a cylindrical fan rotor **(20)** on a drive shaft **(71)** of said fan motor **(21)**, and a third step of fixing said mounting base **(25)** to a fan housing **(19)** by inserting said fan rotor **(20)** in said fan housing **(19)** are carried out in order.

3. The ventilating apparatus manufacture method of claim 1, wherein the step of mounting on said casing **(2)** said heat exchanging element **(15)**, preassembled so as to provide alternate formation of passages for indoor air and passages for outdoor air in the direction in which many plate-like members **(44, 44, ...)** are stacked together, is carried out posterior to said fan mounting step.

4. The ventilating apparatus manufacture method of claim 1, wherein the step of mounting on said casing **(2)** a damper assembly **(36)**, preassembled so as to make a passage formed therein for allowing air to bypass said heat exchanging element **(15)** switchable between a communication state and a cutoff state, is carried out between said casing assembling step and said fan mounting step.
